Europäisches Patentamt

European Patent Office

Office européen des brevets

(11) Publication number: **0 105 980**
**B1**

# EUROPEAN PATENT SPECIFICATION

(45) Date of publication of patent specification: **29.01.86**

(51) Int. Cl.⁴: **B 01 J 8/24, C 10 G 11/18**

(21) Application number: **82305388.9**

(22) Date of filing: **11.10.82**

(54) **Fluid particle backmixed cooling process and apparatus.**

(43) Date of publication of application:
**25.04.84 Bulletin 84/17**

(45) Publication of the grant of the patent:
**29.01.86 Bulletin 86/05**

(84) Designated Contracting States:
**AT BE DE FR GB IT NL SE**

(56) References cited:
**GB-A-2 093 366**
**US-A-2 963 422**
**US-A-2 970 117**
**US-A-4 219 442**

(73) Proprietor: **UOP Inc.**
**10 UOP Plaza Algonquin & Mt. Prospect Roads**
**Des Plaines Illinois 60016 (US)**

(72) Inventor: **Lomas, David Alfred**
**6, South Forest Avenue**
**Arlington Heights Illinois, 60004 (US)**
Inventor: **Thompson, Gregory John**
**419, Lorraine Avenue**
**Waukegan Illinois 60085 (US)**

(74) Representative: **Newby, John Ross et al**
**J.Y. & G.W. Johnson Furnival House 14/18 High**
**Holborn**
**London WC1V 6DE (GB)**

EP 0 105 980 B1

# 0 105 980

**Description**

This invention relates to fluid particle cooling and in particular to the cooling of a particulated solid such as fluidizable catalyst which was contaminated by the deposition thereupon of a combustible material and has been rid of such deposit contamination by combustion of the deposit. The present invention will be most useful in a process for regenerating coke-contaminated fluent cracking catalyst, but it should find use in any process in which combustible material is burned from solid, fluidizable particles.

The fluid catalytic cracking process (hereinafter FCC) has been extensively relied upon for the conversion of starting materials, such as vacuum gas oils, and other relatively heavy oils, into lighter and more valuable products. FCC involves the contact in a reaction zone of the starting material, whether it be vacuum gas oil or another oil, with a finely divided, or particulated, solid, catalytic material which behaves as a fluid when mixed with a gas or vapour. The catalytic material possesses the ability to catalyze the cracking reaction, and in so acting it is surface-deposited with coke, a by-product of the cracking reaction. Coke is comprised of hydrogen, carbon and other material such as sulphur, and it interferes with the catalytic activity of an FCC catalyst. Facilities for the removal of coke from an FCC catalyst, so-called regeneration facilities or regenerators, are ordinarily provided within an FCC unit. Regenerators contact the coke-contaminated catalyst with an oxygen-containing gas under conditions such that the coke is oxidized and a considerable amount of heat is released. A portion of this heat leaves the regenerator with a flue gas, comprised of excess regeneration gas and the gaseous products of coke oxidation, and the balance of the heat leaves the regenerator with the regenerated, or relatively coke-free catalyst. Regenerators operating at superatmospheric pressures are often fitted with energy-recovery turbines which expand the flue gas as it escapes from the regenerator and recover a portion of the energy liberated in the expansion.

The fluidized catalyst is continuously circulated from the reaction zone to the regeneration zone and then again to the reaction zone. The fluid catalyst, as well as providing catalytic action, acts as a vehicle for the transfer of heat from zone to zone. Catalyst exiting the reaction zone is spoken of as being "spent", that is partially deactivated by the deposition of coke upon the catalyst: Catalyst from which coke has been substantially removed is spoken of as "regenerated catalyst".

The rate of conversion of the feedstock within the reaction zone is controlled by regulation of the temperature, the activity of the catalyst and the quantity of catalyst (i.e. catalyst to oil ratio) therein. The most common method of regulating the temperature is by regulating the rate of circulation of catalyst from the regeneration zone to the reaction zone which simultaneously increases the catalyst/oil ratio. That is to say, if it is desired to increase the conversion rate, an increase in the rate of flow of circulating fluid catalyst from the regenerator to the reactor is effected. Inasmuch as the temperature within the regeneration zone under normal operations is invariably higher than the temperature within the reaction zone, this increase in influx of catalyst from the hotter regeneration zone to the cooler reaction zone effects an increase in reaction zone temperature. It is interesting to note that this higher catalyst circulation rate is sustainable by virtue of the system being a closed circuit, and, the higher reactor temperature is sustainable by virtue of the fact that increased reactor temperatures, once effected, produce an increase in the amount of coke being formed in the reaction and deposited upon the catalyst. This increased production of coke, provides, upon its oxidation within the regenerator, an increased evolution of heat. It is this increased heat evolved within the regeneration zone which, when conducted with the catalyst to the reaction zone, sustains the higher reactor temperature operation.

Recently, politico-economic restraints which have been put upon the traditional lines of supply of crude oil have made necessary the use, as starting materials in FCC units, of heavier-than-normal oils. FCC units must now cope with feedstocks such as residual oils and in the future may have to be operated with mixtures of heavy oils with coal or shale-derived feeds. ·

The chemical nature and molecular structure of the feed to the FCC unit will affect the level of coke on spent catalyst. Generally speaking, the higher the molecular weight, the higher the Conradson carbon, the higher the heptane insolubles, and the higher the carbon to hydrogen ratio, the higher will be the coke level on the spent catalyst. Also, high levels of combined nitrogen, such as found in shale-derived oils, will also increase the coke level on the spent catalyst. The processing of heavier and heavier feedstocks, and particularly the processing of deasphalted oils, or direct processing of atmospheric bottoms from a crude unit, commonly referred to as reduced crude, does cause an increase in all or some of these factors and does therefore cause an increase in coke level on spent catalyst.

This increase in coke level on spent catalyst results in a larger amount of coke burnt in the regenerator per kg of catalyst circulated. An increase in the level of coke on spent catalyst will increase the temperature difference between the reactor and the regenerator, and will increase the regenerated catalyst temperature. A reduction in the amount of catalyst circulated is therefore necessary in order to maintain the same reactor temperature. However, a lower catalyst circulation rate will result in a fall in conversion, making it necessary to operate with a higher reactor temperature in order to maintain conversion at the desired level. This will cause a change in yield structure which may or may not be desirable, depending on what products are required from the process. Also there are limitations to the temperatures that can be tolerated by an FCC catalyst without there being a substantial detrimental effect on catalyst activity. Generally, with a commonly available modern FCC catalyst, temperatures of regenerated catalyst are usually maintained below 760°C, since loss of activity would be very severe about 760—790°C. If a relatively common reduced

2

crude such as that derived from Light Arabian crude oil were charged to a conventional FCC unit, and operated at a temperature required for high conversion to lighter products, i.e. similar to that for a gas oil charge, the regenerator temperature would operate in the range of 870—980°C. This would be too high a temperature for the catalyst, require very expensive materials of construction, and give an extremely low catalyst circulation rate. It is therefore accepted that when materials are processed that would give excessive regenerator temperatures, a means must be provided for removing heat from the regenerator, which enables a lower regenerator temperature, and a lower temperature difference between the reactor and the regenerator.

A common prior art method of heat removal provides coolant filled coils within the regenerator, which coils are in contact with the catalyst from which coke is being removed. For example, US—A—2,819,951; US—A—3,990,992 and US—A—4,219,442 disclose fluid catalytic cracking processes using dual zone regenerators with cooling coils mounted in the second zone. These cooling coils must always be filled with coolant and thus are removing heat from the regenerator, even during start-up when such removal is particularly undesired, because the typical metallurgy of the coils is such that the coils would be damaged by exposure to the high regenerator temperatures (up to 732°C or 1350°F) without coolant serving to keep them relatively cool. The second zone is also for catalyst disengagement prior to passing the flue gas from the system, and may contain catalyst in a dense phase (US—A—2,819,951 and US—A—4,219,442) or in a dilute phase (US—A—3,990,992).

The prior art is also replete with disclosures of FCC processes which utilize dense or dilute phase regenerated fluid catalyst heat removal zones or heat exchangers that are remote from and external to the regenerator vessel to cool hot regenerated catalyst for return to the regenerator. Examples of such disclosures are as set forth in US—A—2,970,117; US—A—2,873,175; US—A—2,862,798; US—A—2,596,748; US—A—2,515,156; US—A—2,492,948; and US—A—2,506,123. At least one of the above U.S. Patents (US—A—2,970,117) discloses that the rate of return of the cooled catalyst to the regenerator may be controlled by the regenerator (dense catalyst phase) temperature.

An important consideration in the above FCC processes involving regenerator heat removal is the method of control of the quantity of heat removed. For example, in US—A—4,219,442 the method involves the control of the extent of immersion of cooling coils in a dense phase regenerated catalyst fluidized bed. In US—A—2,970,117 and US—A—2,463,623, the sole method involves regulation of the rate of flow of regenerated catalyst through external catalyst coolers. The disadvantages of the first above heat removal method have been previously discussed, i.e. interference of the cooling coils with unit start-up and catalyst disengagement. The above second method of heat removal, utilizing external coolers and varying the rate of catalyst circulation through them as the exclusive means of control of the heat exchanger duty, involves the continual substantial changing of the catalyst loading on the regenerator with the associated difficulty or impossibility of maintaining convenient steady state operations to an acceptable extent.

It is known to those skilled in the art of chemical engineering that the heat transfer coefficient of a heat exchange surface varies in relation to the mass velocity across such surface for fluidized systems. See, for example, the article "Fluidized-bed Heat Transfer: A Generalized Dense-phase Correlation"; *A. I. Ch. E. Journal*; December, 1956; Vol. 2, No. 4; ppg. 482—488.

The present invention enables a high degree of flexibility and efficiency of operation of a fluidized particle cooler, particularly when associated with an FCC regenerator, with the cooler remote from the FCC regenerator. Thus, the catalyst can be passed through the shell side of a shell and tube heat exchanger, which comprises the cooler, and a controllable quantity of fluidizing gas is also passed to the shell side of the heat exchanger, thereby providing a unique opportunity to utilize principles involving the relationship between heat transfer coefficients and mass velocity to control the amount of cooling as well as to take advantage of means to prepare the regenerated catalyst for use in the reactor involving the choice of fluidizing gas composition and the effect of that combustion on undesired contaminants that may be present on the catalyst.

Accordingly, the invention is, in one embodiment, a process for cooling hot fluidized solid particles comprising circulating said hot particles into a cooling zone wherein heat is withdrawn from said hot particles by indirect heat exchange with a cooling fluid enclosed in a heat exchange means inserted into said cooling zone to produce relatively cool particles, which is characterised in that said particles are maintained in said cooling zone as a dense phase fluidized bed by passing a fluent fluidizing medium upwardly through the cooling zone at a velocity sufficient to cause backmixing of said particles and in that at least a portion of the quantity of heat withdrawn from said particles in said cooling zone is controllably maintained by controlling the quantity of said fluidizing medium passed into the cooling zone, whereby the heat transfer coefficient between said heat exchange means and said dense phase fluidized bed is controlled.

In a second embodiment, the invention is an apparatus for cooling hot fluidized solid particles which apparatus comprises in combination:

(a) a hot particle collection chamber;

(b) a shell and tube heat exchanger of vertical orientation, remote from said collection chamber having the upper portion of the shell of said heat exchanger in sealed communication with said collection chamber such that particles can circulate to and from said collection chamber through said shell;

(c) a fluidizing gas inlet conduit connected to a bottom portion of the shell side of said heat exchanger,

**0 105 980**

such that fluidizing gas can pass into said shell side and maintain a continuously backmixed dense phase fluidized catalyst bed therein;

(d) a gas flow control valve placed in said fluidizing gas inlet conduit and a control system comprising means to sense a controlled variable measuring the duty of said heat exchanger, control means connecting with said controlled variable sensing means and developing an output signal, and means for transmitting said output signal to said gas flow control valve whereby the latter is adjusted responsive to said controlled variable, thereby regulating the flow of fluidizing gas into said heat exchanger and simultaneously regulating the heat transfer coefficient between the outside surface of the tubes of said heat exchanger and said dense phase fluidized catalyst bed; and

(e) inlet and outlet conduits connected to said tubes of said heat exchanger, such that a cooling fluid can flow through said tubes.

In a third embodiment, the invention is a process for regenerating a coke contaminated fluid catalyst and for simultaneously controlling the temperature of regenerated catalyst, said process including the steps of:

(a) introducing an oxygen-containing regeneration gas stream, a stream of coke-contaminated fluid catalyst particles, and a recycle stream of relatively cool regenerated catalyst particles, into a lower locus of a dilute phase combustion zone maintained at a temperature sufficient for coke oxidation and therein oxidizing coke to produce hot regenerated catalyst particles and hot flue gas;

(b) transporting said hot flue gas and said hot regenerated catalyst particles from an upper locus of said combustion zone into a regenerated catalyst disengaging zone, wherein said hot regenerated catalyst particles are separated from said hot flue gas;

(c) transporting a portion of said hot regenerated catalyst particles from said disengaging zone to an upper locus of a cooling zone separate from and in open communication with said disengaging zone;

(d) cooling the particles transported to said cooling zone by passing from downwardly therethrough into contact with indirect heat exchange means inserted into said cooling means, whereby heat is withdrawn from said hot regeneration catalyst particles by indirect heat exchange with a cooling fluid circulated through the heat exchanger means to produce a stream comprising relatively cool regenerated catalyst particles which is withdrawn from a lower locus of said cooling zone, said catalyst particles being maintained in said cooling zone as a dense phase fluidized bed by passing a fluidizing gas upwardly through the cooling zone at a velocity sufficient to cause backmixing of said particles, the quantity of heat withdrawn from said catalyst particles in said cooling zone being controllably maintained by controlling a combination of the quantity of said fluidizing gas passed into said cooling zone and the quantity of particle flow through said cooling zone, whereby the heat transfer coefficient between said heat exchange means and said dense phase fluidized bed is controlled;

(e) passing at least a portion of said stream of relatively cool regenerated catalyst particles withdrawn from said cooling zone to the lower locus of said combustion zone as said recycle stream of relatively cool regenerated catalyst particles; and

(f) recovering a product stream of hot regenerated catalyst particles from said disengagement zone at a temperature which is indirectly controlled by the amount of heat removed in cooling step (d).

In a fourth embodiment, the invention is a process for regenerating a coke contaminated fluid catalyst for use in a fluidized catalytic cracking reaction zone and for simultaneously controlling the temperature of regenerated catalyst, said process including the steps of:

(a) introducing an oxygen containing regeneration gas stream and a stream of coke-contaminated fluid catalyst particles into a lower locus of a combustion zone maintained at a temperature sufficient for coke oxidation and therein oxidizing coke to produce hot regenerated catalyst particles and hot flue gas;

(b) transporting said hot flue gas and said hot regenerated catalyst particles from an upper locus of said combustion zone into a regenerated catalyst disengaging zone, wherein said hot regenerated catalyst particles are separated from said hot flue gas;

(c) transporting at least a portion of said hot regenerated catalyst particles from said disengaging zone to the upper locus of a cooling zone separate from and in open communication with said disengaging zone;

(d) cooling the particles transported to said cooling zone by passing them downwardly therethrough into contact with an indirect heat exchange means inserted into said cooling means, whereby heat is withdrawn from said hot regeneration catalyst particles by indirect heat exchange with a cooling fluid circulated through the heat exchange means to produce a stream comprising relatively cool regenerated catalyst particles which is withdrawn from a lower locus of said cooling zone, said catalyst particles being maintained in said cooling zone as a dense phase fluidized bed by passing a fluidizing gas upwardly through the cooling zone at a velocity sufficient to cause backmixing of said particles, the quantity of heat withdrawn from said catalyst particles in said cooling zone being controllably maintained by controlling a combination of the quantity of said fluidizing gas passed into said cooling zone and the quantity of particle flow through said cooling zone, whereby the heat transfer coefficient between said heat exchange means and said dense phase fluidized bed is controlled; and

(e) passing at least a portion of the stream comprising relatively cool regenerated catalyst particles withdrawn from said cooling zone to the fluidized catalytic cracking reaction zone.

In a fifth embodiment, the invention is a process for regenerating a coke contaminated fluid catalyst

4

and for simultaneously controlling the temperature of regenerated catalyst, said process including the steps of:

(a) introducing an oxygen-containing regeneration gas stream and coke-contaminated fluid catalyst particle stream into a lower locus of a dilute phase combustion zone maintained at a temperature sufficient for coke oxidation and therein oxidizing coke to produce hot regenerated catalyst and hot flue gas;

(b) transporting said hot flue gas and said hot regenerated catalyst particles from an upper locus of said combustion zone into a regenerated catalyst disengaging zone, wherein said hot regenerated catalyst particles are separated from said hot flue gas;

(c) mixing said hot regenerated catalyst particles in said disengagement zone with a stream of relatively cool catalyst particles obtained from the hereinafter described cooling zone to obtain a mixture of regenerated catalyst particles having a desired temperature;

(d) transporting a portion of said mixture of regenerated catalyst particles from said disengagement zone to the upper locus of a cooling zone separate from and in open communication with said disengagement zone;

(e) cooling the particles transported to said cooling zone by passing them into contact with an indirect heat exchange means inserted into said cooling means whereby heat is withdrawn from the transported particles by indirect heat exchange with a cooling fluid circulated through the heat exchange means to produce relatively cool catalyst particles, said catalyst particles being maintained in said cooling zone as a dense phase fluidized bed by passing a fluidized gas upwardly through the cooling zone at a velocity sufficient to cause substantially complete backmixing of said particles, thereby returning a stream of relatively cool catalyst particles back to said disengagement zone, wherein the quantity of heat withdrawn from said particles in said cooling zone is controllably maintained by controlling the quantity of said fluidizing gas passed into the cooling zone, whereby the heat transfer coefficient between said heat exchange means and said dense phase fluidized bed is controlled; and

(f) recovering another portion of said mixture of catalyst particles from the disengagement zone as a product stream of regenerated catalyst particles having a temperature which is indirectly controlled by the amount of heat removed in step (e).

Other embodiments of the present invention encompass further details such as process streams and the function and arrangement of various components of the apparatus, all of which are hereinafter disclosed in the following discussion of each of these facets of the invention.

From the foregoing it will be seen that the present invention, in its process aspects, consists of steps for the cooling of a fluidized particulate solid, with an important application being directed to a process for the combustion of a combustible material from fluidized solid particles containing the combustible material, including the step of introducing oxygen-containing combustion gas and the fluidized solid particles into a combustion zone maintained at a temperature sufficient for oxidation of the combustible material. The combustible material will be oxidized therein to produce the first dense phase fluidized bed of hot fluidized solid particles which can be cooled by the process of the invention.

The combustion zone may be in dilute phase with the hot particles transported to a disengaging zone wherein the hot particles are collected and maintained as the first bed, or the combustion zone may be in dense phase and in itself comprise the first bed.

In a particularly important aspect, the present invention includes steps for the regenerative combustion within a combustion zone of a coke-contaminated FCC catalyst from a reaction zone to form hot flue gas and hot regenerated catalyst, disengagement and collection of the hot regenerated catalyst, and cooling of a portion of the hot regenerated catalyst by operating a heat removal of cooling zone dense phase with sufficient backmixing to control the heat exchange coefficient between the heat exchange means inserted in the cooling zone and the dense phase fluidized bed to produce cooled regenerated catalyst.

As used herein, the term "hot regenerated catalyst" means regenerated catalyst at the temperature leaving the combustion zone, from about 704°C to about 760°C, while the term "cool regenerated catalyst" means regenerated catalyst at the temperature leaving the cooling zone, from about 55°C to about 140°C, less than the temperature of the hot regenerated catalyst.

In a particularly important embodiment of the invention, there will be included steps for using the cooled regenerated catalyst as a heat sink in the regenerator, and for the use of at least a portion of the cooled regenerated catalyst for control of the temperatures of the combustion zone.

In another particularly important embodiment of the invention, there will be included a step for using the cooled regenerated catalyst to crack feedstock in the reaction zone.

In still another particularly important embodiment of the invention, there will be included steps for the cooling of the hot regenerated catalyst by backmixing and continuously circulating it through the heat removal or cooling zone, and the use of at least a portion of the cooled regenerated catalyst for control of the temperatures of the disengagement zone. There will be a temperature gradient at the bottom of the disengagement zone, with the coolest catalyst being approximate to the opening to the heat removal zone and the hottest catalyst being at the portion of the bottom of the disengagement zone furthest from such opening.

Embodiments of the invention will now be described, by way of example, with reference to the accompanying drawings, in which:—

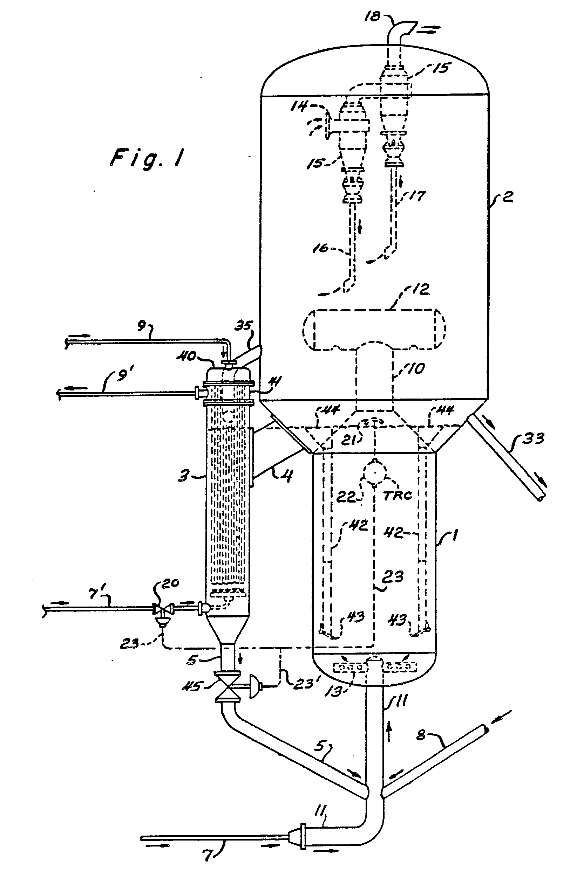

Figures 1, 2 and 3 are all sectional, elevational views of embodiments of regeneration apparatus according to the invention.

In the drawings, a regeneration gas, which may be air or another oxygen containing gas, enters via a line 7 and mixes with coke-contaminated catalyst entering via a conduit 8, and, in Figure 1 only, a cool regenerated catalyst entering via a conduit 5. These streams are shown as all flowing together into a combustion zone 1 via a mixing conduit 11, although each stream could flow separately into the combustion zone 1. The resultant mixture of coke-contaminated catalyst, regeneration gas and, optionally, regenerated catalyst, is distributed into the interior of the combustion zone 1, at a lower part thereof, via the conduit 11 and a distributor 13. Coke-contaminated catalyst, commonly contains from about 0.1 to about 5 wt.% carbon, as coke. Coke is predominantly carbon, but it can contain from about 5 to about 15 wt.% hydrogen, as well as sulphur and other materials. The regeneration gas and entrained catalyst flows upward from the lower part of the combustion zone 1 to the upper part thereof in dilute phase. The term "dilute phase", as used herein, means a catalyst/gas mixture of less than 480 kg/m$^3$, and "dense phase" means such mixture equal to or more than 480 kg/m$^3$ (30 lbs. per cubic foot). Dilute phase conditions, that is a catalyst/gas mixture of less than 480 kg/m$^3$, and typically 32—160 kg/m$^3$, are the most efficient for coke oxidation. As the catalyst/gas mixture ascends within the combustion zone 1, the heat of combustion of coke is liberated and absorbed by the now relatively carbon free catalyst, in other words by the regenerated catalyst.

The rising catalyst/gas stream flows through a passageway 10 and impinges upon a surface 12, which changes the direction of flow of the stream and causes almost all of the hot regenerated catalyst flowing from the combustion zone 1 to disengage from the flue gas and fall to the bottom portion of a disengagement zone 2. The catalyst collection area of the disengagement zone may be a cone-shaped annular receptacle, as shown, or any other shape appropriate for collecting catalyst particles. The gaseous products of coke oxidation and excess regeneration gas, or flue gas, and the very small uncollected portion of hot regenerated catalyst flow up through the disengagement zone 2 and enters a separation means 15 through an inlet 14.

The separation means 15 may be cyclone separators, as schematically shown in all three Figures, or any other effective means for the separation of particulates from a gas stream. Catalyst separated from the flue gas falls to the bottom of the disengagement zone 2 via conduits 16 and 17. The flue gas which exits from the disengagement zone 2 via a conduit 18, may proceed to an associated energy recovery system (not shown). Having the disengagement zone 2 in upward communication with the combustion zone 1 is advantageous, in comparison to schemes in which the gas/catalyst mixture flows upward into a relatively dense phase heat removal zone, in that, with the former, there is a substantial reduction in the loading of the regenerator cyclones which virtually eliminates large losses of catalyst from FCC units during operational upsets.

The heat exchanger 3 is disposed vertically with the catalyst in the shell side and the heat exchange medium passing through the heat exchanger tubes via lines 9 and 9'. The preferred heat exchange medium would be water, which would change at least partially from liquid to gas phase (steam) when passing through the tubes. The tube bundle in the heat exchanger will preferably be of the "bayonet" type wherein one end of the bundle is unattached, thereby minimizing problems caused by the expansion and contraction of the heat exchanger components.

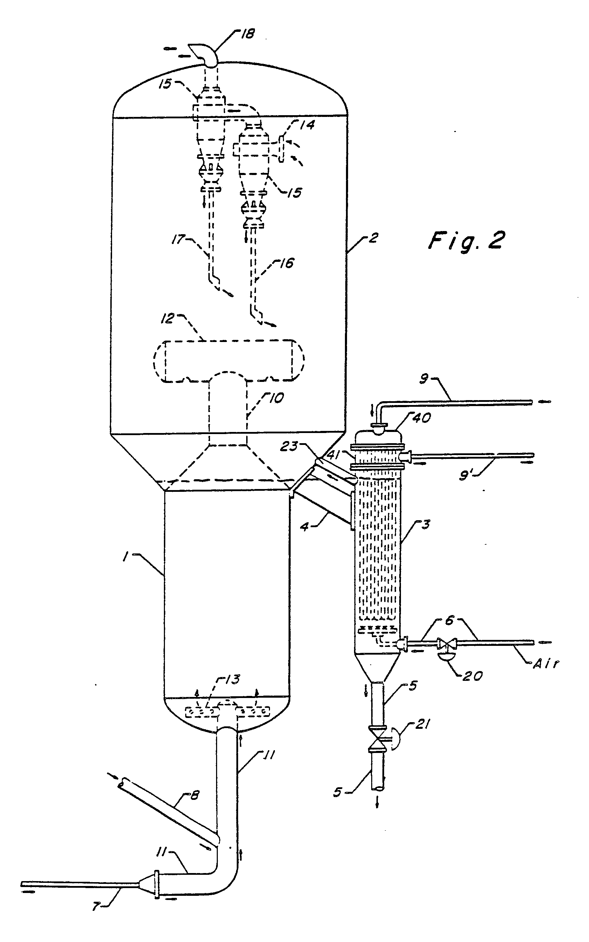

With reference to Figures 1 and 2, catalyst collected in the disengaging zone 2 is passed in dense phase, via a hot catalyst conduit 4, downwardly into the shell side of the shell and tube heat exchanger 3. The solids loading circulation rate through the heat exchanger 3 will typically be from 2 to 200 kg/m$^2$/second.

With reference to Figure 1, a fluidizing gas, preferably air, is passed into a lower portion of the shell side of the heat exchanger 3 via a line 7' and a control valve 20 at a superficial fluidizing gas velocity in the range 0.015 to 0.61 metres/second (0.05 to 2 feet/second), with 0.03 to 0.06 metres/second (0.1 to 0.2 feet/second) being preferred, thereby maintaining a dense phase fluidized catalyst bed on the shell side. A control valve 45 in the conduit 5 regulates catalyst flow through the heat exchanger 3. An associated control system comprises a means 21 to sense the temperature in a portion of the combustion zone 1, such as the upper portion shown, a temperature control means 22 having an adjustable set point connecting with the temperature sensing means 21 and developing output signals, and lines 23 and 23' for transmitting the output signals to the control valves 20 and 45, respectively, whereby the valves may be adjusted in response to changes in the temperature at the upper portion of the combustion zone 1. The temperature control means 22, which may incorporate an analogue or digital computer, will have the capability of selecting the optimum combination of fluidizing gas and catalyst flow rates. Such a capability may be built or programmed into the means 22 for a given system by one skilled in the art and will probably be based on empirical relationships derived from the observed operation of the system. The flow of fluidizing gas to the shell side of the heat exchanger 3 and the flow of catalyst through the heat exchanger 3 will thereby be regulated which in turn regulates the mass velocity of the fluidized bed over the outside surfaces of the tubes by affecting the extent of turbulence and mass flow of the bed, which in turn regulates the heat transfer coefficient across such surfaces, and thus the quantity of heat transfer. Of course, varying the rate of catalyst circulation will to some extent preclude steady state operations, but the degree of disruption of steady state operations will remain at an acceptable level due to the combining of fluidizing gas rate control with the catalyst rate control to control heat exchanger duty.

Still referring to Figure 1, the catalyst will flow from the bottom portion of the heat exchanger 3, through the discharge conduit 5, and back into the lower portion of the combustion chamber 1 via the vertical mixing conduit 11. Hot regenerated catalyst is returned to the FCC reactor via a conduit 33.

Details are shown in Figures 1 and 2 of a preferred embodiment of heat exchanger 3 and the manner of its interconnection with the disengagement zone 2. The heat exchanger 3 is shown (see the broken line in Figure 1) with the shell side filled with a dense phase fluidized catalyst bed to a level slightly higher than the catalyst inlet into the heat exchanger 3. Catalyst flows into the inlet of the conduit 4 from the catalyst collection section at the bottom of the disengagement zone 2. An optional vent 35 in Figure 1 (23 in Figure 2) is shown connecting the heat exchanger 3 to the disengagement zone 2 above the level of the hot catalyst conduit 4 which serves to allow fluidizing gas to escape from the shell of the heat exchanger 3 into the disengagement zone 2. This vent 35, 23 is required only in those instances where the internal diameter of the conduit 4 is insufficient to supply a required solids loading to the heat exchanger 3 and at the same time permit countercurrent venting of the flue gas, the latter being the most desirable configuration. The tube bundle is attached at the top or "head" of the heat exchanger, but not at any other location. A typical configuration of tubes in a bayonet type bundle would be 25 mm tubes each descending from an inlet manifold 40 in the head down into the shell through a 75 mm tube sealed at its bottom, each 25 mm tube emptying into the 75 mm tubes in which it is contained just above the sealed end of the 75 mm tube. A liquid, such as water, would be passed down into the 25 mm tubes, would empty into the 75 mm tubes, would absorb heat from the hot catalyst through the wall of the 75 mm tubes as it passed upward through the annular space of the 75 mm tubes and would exit the heat exchanger, at least partially vaporized, from an outlet manifold 41 in the head. It is essential that the quantity of hot particles or catalyst entering the heat exchanger 3 be sufficient to maintain a depth of dense phase fluid catalyst bed which substantially submerges the tubes in the dense phase bed. There are a number of ways of accomplishing this objective, one of which is shown in Figure 1. It is assumed that the flow of hot catalyst into the disengagement zone 2 will always exceed the heat exchanger and hot catalyst exit (via conduit 33) flow requirements and the operation will be set up so that will in fact be the case. Figure 1 shows standpipes 42 with bottom flap valves 43 and upper weirs 44. Catalyst which does not flow through the heat exchanger 3 and the conduit 33 will overflow the weirs 44 and fill the diplegs 42. When the force exerted by the head of catalyst filling a dipleg 42 on the flap valve 43, exceeds the pressure required to open the valve 43, i.e. to overcome the force exerted by a spring or counterweight holding the valve closed, catalyst will empty from the dipleg into the combustion zone 1. The valves and/or the head of catalyst in the diplegs also serve to prevent undesired reversal of flow up to the diplegs 42. The dense phase bed level and thus the catalyst head available to the heat exchanger 3 will therefore be held at the level of the lips of the weirs 44.

The above scheme provides the ability to remove heat from the FCC regenerator as required to maintain a maximum combustion zone temperature and at the same time maintain an acceptable degree of stable steady state operation conducive to the controllability and efficiency of the regenerator, all while enjoying flexibility and ease of operation of an external catalyst cooler or heat exchanger (particularly the ability to not have to utilize cooling during start-up) and the efficiency of catalyst-flue gas separation achieved by a disengagement zone unencumbered by a dense catalyst phase and heat removing paraphernalia.

It should be emphasized, however, that the FCC embodiment illustrated by Figure 1 is only one possible application of the present invention which in its broadest sense is a process for cooling any hot fluidized particles for any purpose. Although Figure 1 incorporates details to illustrate a particularly preferred embodiment of the present invention, i.e. cooling means associated with a particular design of FCC regenerator, the apparatus aspect of the present invention in its broadest sense as set out in the claims may also be identified. Thus, the bottom of the disengagement zone 2 comprises the hot particle collection chamber, the heat exchanger 3 is the shell and tube heat exchanger of vertical orientation, conduit 4 is the hot particle conduit, line 7' is the fluidizing gas inlet conduit, discharge conduit 5 is the cooled particle conduit, mixing conduit 11 is the region of disposition of the cooled particles (although that disposition might also be directly into combustion zone 1), control means 22 is the temperature control means, valves 20 and 45 regulate the flow of fluidizing gas and particle flow in line 7' and conduit 5, respectively, and lines 9 and 9' are the cooling fluid inlet and outlet conduits. The controlled variable illustrated is the temperature at a selected location in the combustion zone 1. Temperature control means 22 will, via valves 20 and 45, effect the respective regulation of the flow of fluidizing gas into the heat exchanger and the flow of cooled particles from the heat exchanger, thereby regulating the heat transfer coefficient between the outside surface of the tubes of the heat exchanger and the fluidized catalyst bed, which, in turn, regulates the duty of the heat exchanger.

With reference now to Figure 2, a fluidizing gas, preferably steam, is passed into a lower portion of the shell side of the heat exchanger 3 via a line 6 at a superficial gas velocity of approximately 0.015 to 0.61 metres/second, with 0.03 to 0.06 metres/second being preferred, thereby maintaining a dense phase fluidized catalyst bed in the shell side. The control valve 20 is placed in the line 6 and is capable of adjusting the rate of fluidizing gas to achieve optimization of a combination of variables affected by that rate, particularly when the fluidizing gas is steam. These variables comprise: the quantity of heat to be withdrawn from the catalyst in the cooling zone; the desired extent of passivation by the steam of contaminating metals on the catalyst; and the extent desired of the stripping of undesired gases from the catalyst by the steam.

The fluidizing gas rate controls the quantity of heat withdrawn from the catalyst because it affects the mass velocity of the fluidized bed over the outside surfaces of the tubes by affecting the extent of turbulence of the bed. This in turn affects the heat transfer coefficient across such surfaces, and thus the quantity of heat transfer.

When the fluidizing gas is steam, some passivation of the undesired catalytic activity of contaminating metals such as nickel and vanadium is achieved. By first contacting the relatively cool catalyst at the bottom of the heat exchanger with the fluidizing gas, the thermal shock which would be caused by an extreme difference in temperature between the steam and catalyst has been minimized thereby aiding the stability of the catalyst system. Contacting catalyst with steam at elevated temperatures does cause some catalyst deactivation. However, FCC processing of residual feedstocks requires high catalyst addition and withdrawal rates in order to maintain catalyst metal concentrations at reasonable levels. Thus, with these high addition rates, the effect of steam deactivation would probably be insignificant and might even help reduce the undesirable (non-selective) activity characteristics of fresh catalyst prior to introducing that catalyst to the reactor.

The fluidizing gas, particularly steam, also serves to strip undesired gases adsorbed on the catalyst in the regeneration zone, such as oxides of carbon and nitrogen. If these gases are allowed to be carried over into the reaction zone they are then released and create an additional load on the compressing means in the FCC gas concentration facilities.

By "optimization" of the above variables is meant that the rate of the fluidizing gas is adjusted to a point where the desired balance is struck between these variables. Thus, for example, the rate of fluidizing steam might not be raised to the level where the maximum metals passivation would occur because to do so would cause a much greater than desired amount of heat removal from the catalyst. However, the rate might still be slightly above that corresponding to the exact amount of heat removal desired, because slightly greater than that amount could be tolerated to obtain a greater extent of metals passivation.

The control valve 21 in Figure 2 will regulate the flow of catalyst from the heat exchanger 3 to the reactor vessel via the conduit 5. There may be a catalyst flow control system, which is not shown in Figure 2, associated with the valve 21, whereby the latter is adjusted responsive to the temperature at a selected location in the reactor vessel, thereby regulating the flow of catalyst from the heat exchanger 3 and maintaining a desired reactor temperature. The reaction zone temperature, of course, varies directly and almost immediately with the rate of recycled regenerated catalyst. The catalyst even after leaving the heat exchanger 3 will be at a temperature of not less than about 590°C, substantially hotter than the temperature of the FCC feedstock (which is not greater than about 370°C).

The above scheme provides the ability to remove heat from the catalyst to the FCC reactor as required to maintain the reaction zone temperature and at the same time provide a means for contaminating metals passivation and inert gas stripping.

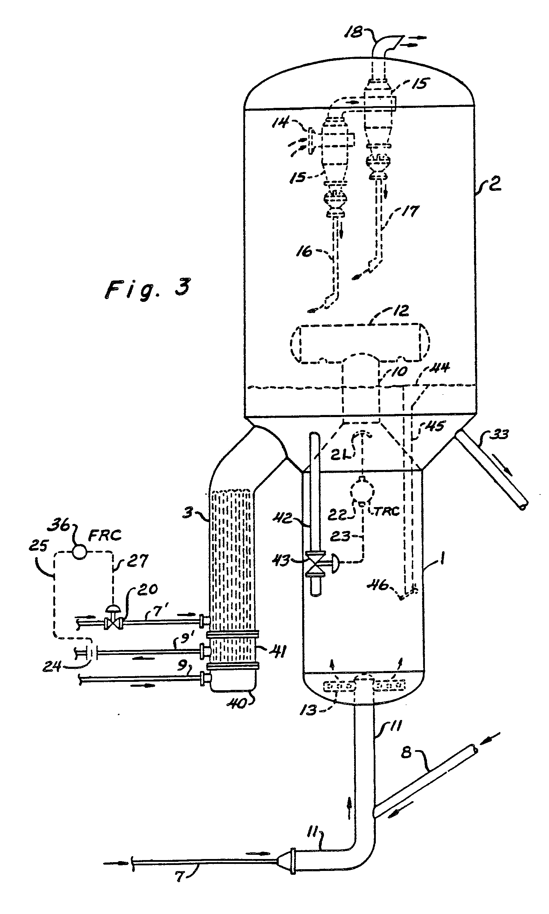

Referring now to Figure 3, the bottom of the shell of the heat exchanger 3 is sealed to catalyst flow and the top of the shell is in sealed communication with the bottom portion of the disengagement zone 2. The level of the dense phase catalyst bed in the disengagement zone will be kept above the opening into the shell and the catalyst may, thus, freely backmix and circulate throughout the inside of the shell and the bottom of the disengagement zone. Fluidizing gas, preferably air, is passed into a lower portion of the shell side of the heat exchanger 3 via the line 7' at a superficial gas velocity of approximately 0.15 to 2.5 metres/second, with 0.3 metres/second being preferred, thereby maintaining a dense phase fluidized catalyst bed in the shell side and effecting turbulent backmixing and flow to and from the disengagement zone. The control valve 20 placed in the line 7' regulates the quantity of fluidizing gas passed into the heat exchanger 3. Catalyst will not leave the system via the external heat exchanger, thus precluding variable catalyst loading on the regenerator to achieve the cooling function and resultant disruption of steady state operations.

Experiments have determined that sufficient backmixing is attainable within the heat exchanger 3 at reasonable superficial gas velocities to totally dispense with a net catalyst flow requirement. This concept does, however, necessitate increased air requirements (as compared to a system where catalyst flow is a second independent variable variable for controlling heat exchanger duty) but eliminates the expensive lower standpipe, expansion joint and slide valve requirements. The air affects the heat transfer coefficient directly by affecting the superficial velocity over the heat exchanger tubes and indirectly by influencing the extent of mass flow of catalyst from the disengagement zone 2 into the heat exchanger 3. The higher mass flow will result in a higher heat exchanger duty also because the average catalyst temperature in the heat exchanger will be higher thereby providing a higher temperature difference ($\Delta T$) to which the amount of heat transfer is directly proportional.

Figure 3 shows a preferred embodiment of heat exchanger 3 and the manner of its interconnection with the disengagement zone 2. The shell side of the heat exchanger is completely filled with a dense phase fluidized catalyst bed which has a level well above the connection between the heat exchanger and the disengagement zone. Catalyst freely circulates and backmixes throughout the heat exchanger shell and disengagement zone forming a dense phase continuum. Fluidizing air which enters the shell via the line 7' (air may be introduced at one or more points in the shell in addition to that shown) rises upward and flows into the disengagement zone 2 where it ultimately leaves the system with the flue gases.

It is essential that the quantity of hot particles or catalyst which enter the heat exchanger 3 be sufficient to maintain a depth of dense phase fluid catalyst bed which substantially submerges the tubes in the dense phase bed and that, of course, is achieved by the design of the apparatus in accordance with this invention.

It is assumed that the flow of hot catalyst into the disengagement zone 2 will always exceed the regenerated catalyst exit (via conduit 33) flow requirements and the operation will be set up so that will in fact be the case. At least a portion of the regenerated catalyst not exiting via the conduit 33 will be circulated to the combustion zone 1 via an external conduit 42 and a control valve 43. Figure 3 also shows a standpipe 45 with a bottom flap valve 46 and an upper weir 44. Catalyst which does not flow through the conduit 42 will overflow the weir 44 and fill the standpipe 45. When the force exerted by the head of catalyst filling the standpipe 45 on the flap valve 46 exceeds that pressure required to open the valve 46, i.e. overcome the force exerted by a spring or counterweight holding the valve closed, catalyst will empty from the standpipe into the combustion chamber 1. The flap valve and/or head of the catalyst in the standpipe also serve to prevent undesired reversal of flow up to the standpipe. The dense phase bed level and thus the catalyst head available to the heat exchanger 3 will therefore be held at the level of the lip of the weir 44.

One control system contemplated by the present invention for regulating the amount of catalyst flowing through the conduit 42 comprises means 21 to sense the temperature in a portion of the combustion zone 1, such as the upper portion shown, temperature control means 22 having an adjustable set point connected to the temperature sensing means 21 and developing output signals, and a line 23 for transmitting the output signals to the control valve 43, whereby the valve may be adjusted responsive to the temperature sensed at the upper portion of the combustion zone 1.

The inlet to the conduit 42 will be placed in the vicinity of the connection between the disengagement zone 2 and the heat exchanger 3 and, thus, will receive catalyst from a relatively cool portion of the above discussed temperature gradient, thereby enabling the necessary temperature difference between the combustion zone and circulating catalyst to achieve a cooling effect.

Although Figure 3 illustrates a single heat exchanger with associated circulating catalyst conduit, it should be understood that other configurations are possible, such as two heat exchangers, of the design illustrated, side by side with the conduit 42 between them.

With regard to control of the duty of the heat exchanger 3, one preferred mode of operation would be where the controlled variable is the amount of steam generated with such amount controllably maintained by controlling the quantity of fluidizing gas to the catalyst bed in the heat exchanger shell. The quantity of steam generated and flowing through the line 9' may be measured by a meter 24 which will develop and transmit an output signal via a line 25 to a flow control means 36. The latter will have an adjustable set point connecting the control valve 20 via a line 27. For simplicity, the meter 24 is shown as an orifice meter in the line 9', but it should be understood that in practice, there will be liquid and gas phases in the line 9' which will have to be separated, i.e. via a "steam drum", with the steam rate measured downstream of such separation. The flow control means 36, which may incorporate an analogue or digital computer, will have the capability of selecting the optimum amount of fluidizing gas. Such capability may be built or programmed into the control means 36 for a given system by one skilled in the art and will probably be based on empirical relationships derived from the observed operation of the system. The flow of fluidizing gas to the shell side of the heat exchanger 3 will thereby be regulated which in turn regulates the mass velocity of the fluidized bed over the outside surfaces of the tubes by affecting the extent of turbulence and mass flow of the bed, which in turn regulates the heat transfer coefficient across such surfaces, and thus the quantity of heat transfer.

The net effect of the preceding mode of operation is that there will be a heat sink available to the regeneration system, the magnitude of which may be closely controlled by the simple positioning of a set point. The operation will thereby be made far more flexible by the availability of this heat sink which can dispose of undesired quantities of heat that might otherwise constitute a process bottleneck. There would of course be the additional benefit of a source of a constant quantity of high pressure steam.

A more preferred mode of operation is controlling the quantity of the fluidizing gas to the shell side of the heat exchanger to controllably maintain the temperature of the regenerated catalyst located in the disengagement zone 2. The latter temperature is directly affected by the quantity of heat withdrawn from the catalyst in the heat exchanger 3. For this mode of course, the quantity of steam generated would vary.

The above preferred heat exchanger duty control scheme provides the ability to remove heat from the FCC regenerator as required to maintain the desired temperature of regenerated catalyst withdrawn from the disengagement zone 2 via the conduit 33 and at the same time maintain an acceptable degree of stable steady state operation conducive to the controllability and efficiency of the regenerator, all while enjoying flexibility and ease of operation of an external catalyst cooler or heat exchanger (particularly the ability to not have to utilize cooling during start-up) and the efficiency of catalyst-flue gas separation achieved by a disengagement zone unencumbered by internal dense catalyst phase heat-removing paraphernalia.

It should be emphasized, however, that the FCC embodiment illustrated by Figure 3 is only one possible application of the present invention which in its broadest sense is a process for cooling any hot fluidized particles for any purpose. The apparatus aspect of the present invention in its broadest sense as featured in the claims may also be identified in Figure 3. Thus, the bottom of the disengagement zone 2

9

comprises the hot particle collection chamber or fluid particle collection section, the heat exchanger 3 is the shell and tube heat exchanger of vertical orientation, the line 7' is the fluidizing gas inlet conduit, the valve 20 regulates the flow of fluidizing gas in the line 7' and the lines 9 and 9' are the cooling fluid inlet and outlet conduits. The controlled variable may be the temperature of the particles withdrawn via the conduit 33 or the particles in or entering the conduit 42 or the volume of steam in the line 9'.

The above described Figures are intended to be schematically illustrative of the present invention and not be a limitation thereon.

The following illustrative embodiments represent two of the particularly preferred modes contemplated for the practice of the invention, expressed in terms of the mass flow rates and temperatures of streams flowing in a regenerator shown in the drawings. The regenerator processes spent catalyst from a reaction zone which is cracking a reduced crude oil feedstock. In the following tabulation the streams flowing within conduits are tabulated with reference to the reference numbers shown on the conduits Figures 1 and 2.

Figure 1 conduits

| Stream | | kg./hr. | (lbs./hr.) | °C | (°F) |
|---|---|---|---|---|---|
| 8 | Coke contaminated catalyst (from reactor) | 1,235,836 | (2,724,552) | 565 | (1050) |
| | Catalyst | 1,220,781 | (2,691,362) | 565 | (1050) |
| | Coke | 14,017 | (30,902) | 565 | (1050) |
| 7+7 | Regeneration gas (air) | 210,254 | (463,530) | 153 | (307) |
| 33 | Hot regenerated catalyst from upper locus of combustion Zone (to reactor) | 1,220,781 | (2,691,362) | 749 | (1380) |
| 10 | Hot regenerated catalyst plus | | | | |
| | Hot flue gas | 1,866,410 | (4,114,730) | 760 | (1400) |
| | Hot catalyst | 1,642,652 | (3,621,428) | 760 | (1400) |
| | Hot gas | 223,758 | (493,302) | 760 | (1400) |
| 5 | Recycled cool regenerated Catalyst (to mixing conduit 11) | 1,642,652 | (3,621,428) | 665 | (1230) |
| 18 | Flue gas | 223,758 | (493,302) | 760 | (1400) |
| 3 | Heat removed by heat removal means—156.86×10⁶ kJ/h (148.67×10⁶ BTU/hr.) | | | | |
| | Heat losses from regenerator vessel—3.60×10⁶ kJ/h (3.41×10⁶ BTU/hr.) | | | | |

It should be noted that in this particular operation the feedstock to the reaction zone is a reduced crude oil, a material which yields a relatively high coke production. Such a high coke production, and the consequent, extraordinarily high evolution of heat in the combustion zone made necessary the recycle of 1,642,652 kg/hr of cooler regenerated catalyst from the heat removal zone to the combustion zone in order to limit the maximum combustion zone temperature to 760°C.

**0 105 980**

Figure 2 conduits

| Stream | | | kg./hr. | (lbs./hr.) | °C | (°F) |
|---|---|---|---|---|---|---|
| 8 | Coke contaminated catalyst (from reactor) | | 1,235,836 | (2,724,552) | 565 | (1050) |
| | Catalyst | | 1,220,781 | (2,691,362) | 565 | (1050) |
| | Coke | | 14,017 | (30,902) | 565 | (1050) |
| 7 | Regeneration gas (air) | | 210,254 | (463,530) | 153 | (307) |
| 4 | Hot regenerated catalyst From disengagement zone (to cooler) | | 1,220,781 | (2,691,362) | 749 | (1380) |
| 10 | Hot regenerated catalyst plus | | | | | |
| | Hot flue gas | | 1,866,410 | (4,114,730) | 760 | (1400) |
| | Hot catalyst | | 1,642,652 | (3,621,428) | 760 | (1400) |
| | Hot gas | | 223,758 | (493,302) | 760 | (1400) |
| 5 | Cool regenerated catalyst (to reactor) | | 1,220,781 | (2,691,362) | 665 | (1230) |
| 18 | Flue gas | | 223,758 | (493,302) | 760 | (1400) |
| 3 | Heat removed by heat removal means—$178.48 \times 10^6$ kJ/h ($169.17 \times 10^6$ BTU/hr.) | | | | | |
| | Heat losses from regenerator vessel—$3.60 \times 10^6$ kJ/h ($3.41 \times 10^6$ BTU/hr.) | | | | | |

**Claims**

1. A process for cooling hot fluidized solid particles comprising circulating said hot particles into a cooling zone (3) wherein heat is withdrawn from said hot particles by indirect heat exchange with a cooling fluid enclosed in a heat exchange means inserted into said cooling zone (3) to produce relatively cool particles, characterised in that said particles are maintained in said cooling zone (3) as a dense phase fluidized bed by passing a fluent fluidizing medium upwardly through the cooling zone (3) at a velocity sufficient to cause backmixing of said particles and in that at least a portion of the quantity of heat withdrawn from said particles in said cooling zone (3) is controllably maintained by controlling the quantity of said fluidizing medium passed into the cooling zone (3), whereby the heat transfer coefficient between said heat exchange means and said dense phase fluidized bed is controlled.

2. The process of claim 1 characterised in that the hot fluidized solid particles are obtained from a hot zone (1) containing a dense phase fluidized bed of said particles, wherein the cooling zone (3) is separate from and in open communication with said hot zone (1) and wherein said velocity is sufficient to cause substantially complete backmixing of said particles, thereby returning relatively cool particles to said hot zone.

3. The process of claim 1 characterised in that the hot particles are passed downwardly through the cooling zone (3) and wherein the quantity of heat withdrawn from said particles is controllably maintained by controlling a combination of the quantity of said fluidizing gas passed into the cooling zone (3) and of the quantity of particles flowing through said cooling zone (3).

4. A process for regenerating a coke-contaminated fluid catalyst and for simultaneously controlling the temperature of regenerated catalyst by employing the cooling process of claim 1, characterised in that said process includes the steps of:

(a) introducing an oxygen-containing regeneration gas stream, and a stream of coke-contaminated fluid catalyst particles into a lower part of a combustion zone (1) maintained at a temperature sufficient for coke oxidation and therein oxidizing the coke to produce hot regenerated catalyst particles and hot flue gas;

(b) transporting said hot flue gas and said hot regenerated catalyst particles from an upper part of said combustion zone (1) into a regenerated catalyst disengaging zone (2), wherein said hot regenerated catalyst particles are separated from said hot flue gas;

(c) transporting a portion of said hot regenerated catalyst particles from said disengaging zone (2) to an upper part of a cooling zone (3) separate from and in open communication with said disengaging zone (2);

(d) cooling the particles transported to said cooling zone (3) by passing them into contact with an indirect heat exchange means inserted into said cooling means, whereby heat is withdrawn from said hot

11

regeneration catalyst particles by indirect heat exchange with a cooling fluid circulated through the heat exchange means to produce a stream comprising relatively cool regenerated catalyst particles which is withdrawn from a lower locus of said cooling zone, said catalyst particles being maintained in said cooling zone (3) as a dense phase fluidized bed by passing a fluidizing gas upwardly through the cooling zone (3) at a velocity sufficient to cause backmixing of said particles, the quantity of heat withdrawn from said catalyst particles in said cooling zone (3) being controllably maintained by controlling a combination of the quantity of said fluidizing gas passed into said cooling zone and the quantity of particle flow through said cooling zone, whereby the heat transfer coefficient between said heat exchange means and said dense phase fluidized bed is controlled; and

(e) recovering a product stream of hot regenerated catalyst particles from said disengagement zone (2) at a temperature which is indirectly controlled by the amount of heat removed in cooling step (d).

5. A process as claimed in claim 4, characterised in that at least a portion of said relatively cool regenerated catalyst particles withdrawn from said cooling zone (3) is passed to the lower part of said combustion zone (1) as a recycle stream of relatively cool regenerated catalyst particles.

6. A process as claimed in claim 4 or claim 5, characterised in that the temperature at a selected position in said combustion zone (1) is controllably maintained by controlling the quantity of said fluidizing gas passed to said cooling zone (3), and thereby the quantity of heat withdrawal from said catalyst in said cooling zone (3), in response to said temperature at said selected position.

7. A process for regenerating a coke-contaminated fluid catalyst as claimed in any of claims 4 to 6, for use in a fluidized catalytic cracking reaction zone, characterised in that at least a portion of the relatively cool regenerated catalyst particles withdrawn from said cooling zone (3) is fed as a stream to the fluidized catalytic cracking reaction zone.

8. The process of claim 7, characterised in that said fluidizing gas comprises steam and the rate of passing said steam to said cooling zone (3) is adjusted to achieve optimization of a combination of variables affected by said rate, said variables comprising: the quantity of heat to be withdrawn from said catalyst in said cooling zone (3); the extent desired of passivation by said steam of contaminating metals on said catalyst; and the extent desired of stripping of gases from said catalyst by said steam.

9. The process of claim 8, characterised in that the temperature at a selected position in said reaction zone is controllably maintained by controlling the quantity of said relatively cool regenerated catalyst passed to said reaction zone in response to said temperature at said selected position.

10. A process as claimed in claim 4, characterised in that said hot regenerated catalyst particles in said disengagement zone (2) are mixed with a stream of relatively cool catalyst particles obtained from the cooling zone (3) to obtain a mixture of regenerated catalyst particles having a desired temperature.

11. Apparatus for cooling hot fluidized solid particles which apparatus comprises in combination: (a) a hot particle collection chamber (2); (b) a shell and tube heat exchanger (3) of vertical orientation, remote from said collection chamber (2) having the upper portion of the shell of said heat exchanger (3) in sealed communication with said collection chamber (2) such that particles can circulate to and from said collection chamber (2) through said shell; characterised in that (c) a fluidizing gas inlet conduit (6, 7') is connected to a bottom portion of the shell side of said heat exchanger (3), such that fluidizing gas can pass into said shell side and maintain a continuously backmixed dense phase fluidized catalyst bed therein; in that (d) a gas flow control valve (20) is placed in said fluidizing gas inlet conduit (6, 7') and a control system (21, 22) is provided comprising means (21) to sense a controlled variable measuring the duty of said heat exchanger (3), control means (22) connecting with said controlled variable sensing means (21) and developing an output signal, and means (23) for transmitting said output signal to said gas flow control valve (20) whereby the latter is adjusted responsive to said controlled variable, thereby regulating the flow of fluidizing gas into said heat exchanger (3) and simultaneously regulating the heat transfer coefficient between the outside surface of the tubes of said heat exchanger (3) and said dense phase fluidized catalyst bed; and in that (e) inlet and outlet conduits (9, 9') are connected to said tubes of said heat exchanger (3), such that a cooling fluid can flow through said tubes.

12. The apparatus of claim 11, characterised in that the lower portion of the shell of said heat exchanger (3) is closed, thereby allowing circulation of all of the cooled catalyst particles back to the hot particle collection chamber.

13. The apparatus of claim 11, characterised in that a particle outlet (5) is located in the lower portion of the shell of said heat exchanger (3), thereby allowing withdrawal of at least a portion of the cooled catalyst particles from the lower portion of the shell of said heat exchanger (3).

14. The apparatus of claim 13, characterised in that a cooled particle conduit (5) connects said particle outlet of said heat exchanger (3) with the region of disposition of cooled catalyst particles, wherein a catalyst particle control valve (45) is located in said cooled catalyst particle conduit (5) and wherein means (21, 22, 23) is provided for transmitting said output signal from said control means (22) to said catalyst particles control valve (45), thereby simultaneously regulating the flow of fluidizing gas into said heat exchanger (3) and the flow of cooled particles from said heat exchanger (3) and allowing control of the quantity of heat withdrawn from the particles.

# 0 105 980

**Patentansprüche**

1. Verfahren zur Abkühlung heisser verwirbelter Feststoffteilchen, bei dem diese heissen Teilchen im Kreislauf in eine Kühlzone (3) geführt werden, wo ihnen durch indirekten Wärmeaustausch mit einem in einer in diese Kühlzone (3) eingeschalteten Wärmeaustauschvorrichtung eingeschlossenen Kühlmittel zur Erzeugung verhältnismässig kühler Teilchen Wärme entzogen wird, dadurch gekennzeichnet, dass diese Teilchen in der besagten Kühlzone (3) als Dichtphasenwirbelbett gehalten werden, indem man ein Verwirbelungsfliessmedium von unten nach oben mit genügender Geschwindigkeit, um Rückvermischen jener Teilchen zu bewirken, durch die Kühlzone (3) leitet, und dass mindestens ein Teil der diesen Teilchen in besagter Kühlzone (3) entzogenen Wärmemenge durch Regulierung der Menge dieses in die Kühlzone (3) eingeleiteten Verwirbelungsmediums unter Kontrolle gehalten wird, wodurch die Wärmeübergangszahl zwischen jener Wärmeaustauschvorrichtung und diesem Dichtphasenwirbelbett gesteuert wird.

2. Verfahren nach Anspruch 1, dadurch gekennzeichnet, dass die heissen verwirbelten Feststoffteilchen aus einer heissen Zone (1) erhalten werden, die ein Dichtphasenwirbelbett dieser Teilchen enthält, wobei die Kühlzone (3) von der besagten heissen Zone (1) getrennt ist und mit dieser frei in Verbindung steht, und wobei jene Geschwindigkeit dazu ausreicht, weitgehend vollständige Rückvermischung dieser Teilchen zu bewirken, so dass verhältnismässig kühle Teilchen in besagte heisse Zone zurückkehren.

3. Verfahren nach Anspruch 1, dadurch gekennzeichnet, dass die heissen Teilchen von oben nach unten durch die Kühlzone (3) geführt werden, wobei die diesen Teilchen entzogene Wärmemenge durch kombinierte Steuerung der Menge jenes in die Kühlzone (3) eingeleiteten Verwirbelungsgases und der Menge der durch diese Kühlzone (3) strömenden Teilchen unter Kontrolle gehalten wird.

4. Verfahren zur Regenerierung verkokten Fliessbettkatalysators und zur gleichzeitigen Steuerung der Temperatur des regenerierten Katalysators durch Anwendung des Kühlverfahrens nach Anspruch 1, dadurch gekennzeichnet, dass dieses Verfahren folgende Stufen umfasst:

(a) Einführung eines sauerstoffhaltigen Regenerationsgasstroms und eines Stroms verkokter Fliessbettkatalysatorteilchen in einen unteren Teil einer Verbrennungszone (1), in der eine zur Koksoxydation ausreichende Temperatur aufrechterhalten und der Koks unter Erzeugung heisser regenerierter Katalysatorteilchen und heissen Abgases oxydiert wird,

(b) Förderung dieses heissen Abgases und dieser heissen regenerierten Katalysatorteilchen aus einem oberen Teil besagter Verbrennnungszone (1) in eine Abrennungszone (2) für den regenerierten Katalysator, wo diese heissen regenerierten Katalysatorteilchen von jenem heissen Abgas getrennt werden,

(c) Förderung eines Teils dieser heissen regenerierten Katalysatorteilchen aus jener Abtrennungszone (2) in einen oberen Teil einer Kühlzone (3), die von der besagten Abtrennungszone (2) getrennt ist und mit dieser frei in Verbindung steht,

(d) Kühlung der in diese Kühlzone (3) geförderten Teilchen, indem man sie mit einer in diese Kühlvorrichtung eingeschalteten indirekten Wärmeaustauschvorrichtung in Berührung bringt, wodurch diesen heissen regenerierten Katalysatorteilchen durch indirekten Wärmeaustausch mit einem durch die Wärmeaustauschvorrichtung umlaufenden Kühlmittel Wärme entzogen wird, um eine aus verhältnismässig kühlen regenerierten Katalysatorteilchen bestehende Strömung zu erzeugen, die an einer niedrigeren Stelle dieser Kühlzone abgezogen wird, wobei diese Katalysatorteilchen in der besagten Kühlzone (3) als Dichtphasenwirbelbett gehalten werden, indem man ein Verwirbelungsgas von unten nach oben mit genügender Geschwindigkeit, um Rückvermischen jener Teilchen zu bewirken, durch die Kühlzone (3) leitet, und wobei die diesen Katalysatorteilchen in besagter Kühlzone (3) entzogene Wärmemenge durch kombinierte Steuerung der in diese Kühlzone eingeleiteten Menge jenes Verwirbelungsgases und der Teilchendurchflussmenge durch diese Kühlzone unter Kontrolle gehalten wird, wodurch die Wärmeübergangszahl zwischen jener Wärmeaustauschvorrichtung und diesem Dichtphasenwirbelbett gesteuert wird, und

(e) Gewinnung eines Produktstroms aus heissen regenerierten Katalysatorteilchen aus jener Abtrennungszone (2) bei einer indirekt durch die in der Kühlstufe (d) entzogene Wärmemenge regulierten Temperatur.

5. Verfahren nach Anspruch 4, dadurch gekennzeichnet, dass mindestens ein Teil jener verhältnismässig kühlen, aus jener Kühlzone (3) abgezogenen regenerierten Katalysatorteilchen als Rückführstrom verhältnismässig kühler regenerierter Katalysatorteilchen in den unteren Teil jener Verbrennungszone (1) eingeleitet wird.

6. Verfahren nach Anspruch 4 oder 5, dadurch gekennzeichnet, dass die Temperatur an einer ausgewählten Stelle in jener Verbrennungszone (1) durch Steuerung der in jene Kühlzone (3) eingeleiteten Menge jenes Verwirbelungsgases und somit die diesem Katalysator in jener Kühlzone (3) entzogene Wärmemenge in Abhängigkeit von jener Temperatur an der besagten ausgewählten Stelle unter Kontrolle gehalten wird.

7. Verfahren zur Regenerierung eines verkokten Fliessbettkatalysators nach einem der Ansprüche 4 bis 6 zur Verwendung in einer Fliessbettreaktionszone zum katalytischen Kracken, dadurch gekennzeichnet, dass mindestens ein Teil der verhältnismässig kühlen, aus jener Kühlzone (3) abgezogenen regenerierten Katalysatorteilchen als Strömung der Fliessbettreaktionszone zum katalytischen Kracken zugeführt wird.

8. Verfahren nach Anspruch 7, dadurch gekennzeichnet, dass jenes Verwirbelungsgas aus Dampf besteht und die dieser Kühlzone (3) zugeführte Dampfmenge so eingestellt wird, dass eine Optimierung der

13

von dieser Menge beeinflussten Kombination von veränderlichen Grössen erzielt wird, wobei diese veränderlichen Grössen die diesem Katalysator in jener Kühlzone (3) zu entziehende Wärmemenge, das gewünschte Ausmass der Passivierung verunreinigender Metalle auf diesem Katalysator durch jenen Dampf und das gewünschte Ausmass der Austreibung von Gasen aus dem Katalysator durch jenen Dampf umfasst.

9. Verfahren nach Anspruch 8, dadurch gekennzeichnet, dass die Temperatur an einer ausgewählten Stelle in jener Reaktionszone durch Steuerung der Menge jenes verhältnismässig kühlen, in diese Reaktionszone eingeleiteten regenerierten Katalysators in Abhängigkeit von jener Temperatur an der besagten ausgewählten Stelle unter Kontrolle gehalten wird.

10. Verfahren nach Anspruch 4, dadurch gekennzeichnet, dass jene heissen regenerierten Katalysatorteilchen in der besagten Abtrennungszone (2) mit einem Strom verhältnismässig kühler, aus der Kühlzone (3) erhaltener Katalysatorteilchen vermischt werden, um ein Gemisch aus regenerierten Katalysatorteilchem mit einer gewünschten Temperatur zu erhalten.

11. Vorrichtung zum Kühlen heisser verwirbelter Feststoffteilchen, bestehend aus einer Kombination von: (a) einer Sammelkammer (2) für heisse Teilchen, (b) einem von dieser getrennt angeordneten, aufrecht stehenden Rohrbündelwärmeaustauscher (3), dessen Manteloberteil so mit jener Sammelkammer (2) in Verbindung steht, dass Teilchen durch diesen Mantel zu und von jener Sammelkammer (2) umlaufen können, dadurch gekennzeichnet, dass (c) eine Verwirbelungsgaszufuhrleitung (6, 7') mit einem Bodenteil der Mantelseite dieses Wärmeaustauschers (3) so verbunden ist, dass Verwirbelungsgas in diese Mantelseite eintreten und darin ein kontinuierlich rückvermischtes Dichtphasenwirbelbett aus Katalysator aufrechterhalten kann, dass (d) ein Gasdurchflussregelventil (20) in dieser Verwirbelungsgaszufuhrleitung (6, 7') angeordnet und ein Kontrollsystem (21, 22) vorgesehen ist, das aus Mitteln (21) zur Erfassung einer Steuergrösse, welche die Last auf jenem Wärmeaustauscher (3) misst, Steuervorrichtungen (22), die mit jenen Steuergrössenerfassungsmitteln (21) verbunden sind und ein Ausgangssignal erzeugen, und Mitteln (23) zur Weiterleitung dieses Ausgangssignals an jenes Gasdurchflussregelventil (20) besteht, wodurch letzteres in Abhängigkeit von jener Steuergrösse verstellt wird und so die Verwirbelungsgasströmung in jenen Wärmeaustauscher (3) und gleichzeitig die Wärmeübergangszahl zwischen der Aussenfläche der Rohre in jenem Wärmeaustauscher (3) und besagtem Dichtphasenwirbelbett aus Katalysator reguliert, und dass (e) Einlass- und Auslassleitungen (9, 9') mit diesen Rohren jenes Wärmeaustauschers (3) so verbunden sind, dass Kühlmittel durch diese Rohre strömen kann.

12. Vorrichtung nach Anspruch 11, dadurch gekennzeichnet, dass der untere Mantelteil jenes Wärmeaustauschers (3) geschlossen ist und dadurch einen Umlauf sämtlicher gekühlter Katalysatorteilchen zurück in die Sammelkammer für heisse Teilchen ermöglicht.

13. Vorrichtung nach Anspruch 11, dadurch gekennzeichnet, dass ein Teilchenauslass (5) im unteren Mantelteil jenes Wärmeaustauschers (3) angeordnet ist und dadurch die Entnahme mindestens eines Teils der gekühlten Katalysatorteilchen aus dem unteren Mantelteil jenes Wärmeaustauschers (3) ermöglicht.

14. Vorrichtung nach Anspruch 13, dadurch gekennzeichnet, dass eine Leitung (5) für gekühlte Teilchen diesen Teilchenauslass an jenem Wärmeaustauscher (3) mit dem Bereich verbindet, wo sich die gekühlten Katalysatorteilchen befinden, wobei ein Katalysatorteilchenregelventil (45) in dieser Leitung (5) für gekühlte Katalysatorteilchen angeordnet ist und Mittel (21, 22, 23) zur Weiterleitung des besagten Ausgabesignals jener Steuervorrichtung (22) an dieses Katalysatorteilchenrevelventil (45) vorgesehen sind, wodurch gleichzeitig die Verwirbelungsgasströmung in jenen Wärmeaustauscher (3) und die Strömung gekühlter Teilchen aus jenem Wärmeaustauscher (3) reguliert und Steuerung der diesen Teilchen entzogenen Wärmemenge ermöglicht werden.

**Revendications**

1. Un procédé de refroidissement de particules solides fluidisées chaudes comprenant la circulation desdites particules chaudes dans une zone de refroidissement (3) dans lequel on extrait de la chaleur desdites particules chaudes par échange thermique indirect, à l'aide d'un fluide de refroidissement contenu dans des moyens d'échange thermique insertés dans ladite zone de refroidissement (3) pour produire des particules relativement fraîches, caractérisé en ce que l'on maintient lesdites particules dans ladite zone de refroidissement (3) à l'état de lit fluidisé à phase dense, en faisant passer un médium de fluidisation fluide, vers le haut à travers la zone de refroidissement (3) à une vitesse suffisante poure entraîner le mélange en retour desdites particules et en ce que l'on maintient de façon contrôlable au moins une portion de la quantité de chaleur extraite desdites particules dans ladite zone de refroidissement (3) en contrôlant la quantité dudit médium de fluidisation qui passe dans la zone de refroidissement (3), ce par quoi l'on contrôle le coefficient de transfert thermique entre lesdits moyens d'échange thermique et ledit lit fluidisé à phase dense.

2. Le procédé de la revendication 1 caractérisé en ce que les particules solides fluidisées chaudes sont obtenues à partir d'une zone chaude (1) contenant un lit fluidisé à phase dense desdites particules, dans lequel la zone de refroidissement (3) est séparée de et en communication ouverte avec ladite zone chaude (1) et dans lequel ladite vitesse est suffisante pour entraîner un mélange en retour essentiellement complet desdites particules, causant le retour des particules relativement fraîches à ladite zone chaude.

3. Le procédé de la revendication 1 caractérisé en ce que l'on fait passer les particules chaudes vers le

14

bas à travers la zone de refroidissement (3) et dans lequel l'on maintient de façon contrôlable la quantité de chaleur extraite desdites particules, en contrôlant une combinaison de la quantité dudit gaz fluidisant qui passe dans la zone de refroidissement (3) et de la quantité de particules qui passent à travers ladite zone de refroidissement (3).

4. Un procédé de régénération d'un catalyseur fluide contaminé par du coke et de contrôle simultané de la température du catalyseur régénéré en utilisant le procédé de refroidissement de la revendication 1, caractérisé en ce que ledit procédé inclut les étapes suivantes:

(a) introduction d'un courant gazeux de régénération contenant de l'oxygène, et d'un courant de particules fluides de catalyseur contaminées par du coke dans une partie inférieure d'une zone de combustion (1) maintenue à une température suffisante pour l'oxydation du coke et oxydation la dedans du coke pour produire des particules chaudes de catalyseur régénéré et du gaz de cheminée chaud;

(b) transport dudit gaz de cheminée chaud et desdites particules chaudes de catalyseur régénéré d'une partie supérieure de ladite zone de combustion (1) dans une zone de dégagement du catalyseur régénéré (2), dans laquelle lesdites particules chaudes de catalyseur régénéré sont séparées dudit gaz de cheminée chaud;

(c) transport d'une portion desdites particules chaudes de catalyseur régénéré de ladite zone de dégagement (2) vers une partie supérieure d'une zone de refroidissement (3) séparée de et en communication ouverte avec ladite zone de dégagement (2);

(d) refroidissement des particules transportées vers ladite zone de refroidissement (3) en les faisant passer en contact avec des moyens d'échange thermique indirect insertés dans lesdits moyens de refroidissement, ce par quoi l'on extrait de la chaleur desdites particules chaudes de catalyseur de régénération, par échange thermique indirect à l'aide d'un fluide de refroidissement qui circule à travers les moyens d'échange thermique, pour produire un courant comprenant des particules de catalyseur régénéré, relativement fraîches, qui est extrait d'un région inférieure de ladite zone de refroidissement, lesdites particules de catalyseur étant maintenues dans ladite zone de refroidissement (3) à l'état de lit fluidisé à phase dense, par passage d'un gaz de fluidisation vers le haut à travers la zone de refroidissement (3) à une vitesse suffisante pour entraîner le mélange en retour desdites particules, la quantité de chaleur extraite desdites particules de catalyseur dans ladite zone de refroidissement (3) étant maintenue de façon contrôlable par contrôle d'une combinaison de la quantité dudit gaz de fluidisation qui passe dans ladite zone de refroidissement et de la quantité de flux de particules à travers ladite zone de refroidissement, ce par quoi l'on contrôle le coefficient de transfert thermique entre lesdits moyens d'échange thermique et ledit lit fluidisé à phase dense; et

(e) récupération d'un courant produit de particules chaudes de catalyseur régénéré venant de ladite zone de dégagement (2) à une température qui est contrôlée de façon indirecte par la quantité de chaleur retirée dans l'étape de refroidissement (d).

5. Un procédé selon la revendication 4, caractérisé en ce que l'on fait passer au moins une portion desdites particules de catalyseur régénéré, relativement fraîches, extraites de ladite zone de refroidissement (3) vers la partie inférieure de ladite zone de combustion (1) à l'état de courant de recyclage de particules de catalyseur régénéré, relativement fraîches.

6. Un procédé selon la revendication 4 ou la revendication 5, caractérisé en ce que l'on maintient de façon contrôlable la température à une position sélectionnée dans ladite zone de combustion (1) en contrôlant la quantité dudit gaz de fluidisation qui passe dans ladite zone de refroidissement (3), et par là la quantité de chaleur extraite dudit catalyseur dans ladite zone de refroidissement (3), en réponse à ladite température à ladite position sélectionnée.

7. Un procédé de régénération d'un catalyseur fluide contaminé par du coke selon l'une quelconque des revendications 4 à 6, destiné à un usage dans une zone de réaction fluidisée de cracking catalytique, caractérisé en ce que l'on alimente la zone de réaction fluidisée de cracking catalytique, à l'aide d'au moins une portion des particules de catalyseur régénéré, relativement fraîches, extraites de ladite zone de refroidissement (3) à l'état de courant.

8. Le procédé de la revendication 7, caractérisé en ce que ledit gaz de fluidisation comprend de la vapeur et en ce que le débit de ladite vapeur qui passe dans ladite zone de refroidissement (3) est réglé pour obtenir l'optimisation d'une combinaison de variables affectées par ledit débit, lesdites variables comprenant: la quantité de chaleur à extraire dudit catalyseur dans ladite zone de refroidissement (3); le degré désiré de passivation par ladite vapeur des métaux contaminant sur ledit catalyseur; et le degré désiré d'extraction des gaz dudit catalyseur par ladite vapeur.

9. Le procédé de la revendication 8, caractérisé en ce que l'on maintient de façon contrôlable la température à une position sélectionnée dans ladite zone de réaction, en contrôlant la quantité dudit catalyseur régénéré relativement frais, qui passe dans ladite zone de réaction, en réponse à ladite température, à ladite position sélectionnée.

10. Un procédé selon la revendication 4, caractérisé en ce que l'on mélange lesdites particules chaudes de catalyseur régénéré dans ladite zone de dégagement (2) avec un courant de particules de catalyseur, relativement fraîches, obtenues à partir de la zone de refroidissement (3) pour obtenir un mélange de particules de catalyseur régénéré ayant une température désirée.

11. Appareil pour le refroidissement de particules solides fluidisées, chaudes, appareil qui comprend en combinaison: (a) une chambre de collection des particules chaudes (2); (b) un échangeur de chaleur tubulaire (3) d'orientation verticale, à distance de ladite chambre de collection (2) ayant la portion supérieure du corps dudit échangeur de chaleur (3) en communication étanche avec ladite chambre de collection (2) de façon à ce que les particules puissent circuler vers et depuis ladite chambre de collection (2) à travers ledit corps; caractérisé en ce que (c) l'on connecte un conduit d'amenée du gaz de fluidisation (6, 7') à une portion du fond du côté du corps dudit échangeur de chaleur (3), de façon à ce que le gaz de fluidisation puisse passer dans ledit côté du corps et puisse maintenir un lit fluidisé de catalyseur à phase dense, mélangé en retour de façon continue à l'intérieur de celui-ci; en ce que (d) l'on place une soupape de commande du flux gazeux (20) dans ledit conduit d'amenée du gaz de fluidisation (6, 7') et que l'on prévoit un système de commande (21, 22) comprenant des moyens (21) de capter une variable commandée qui mesure le régime dudit échangeur de chaleur (3), des moyens de commande (22) en connexion avec lesdits moyens de captage de la variable commandée (21) et développant un signal de sortie, et des moyens (23) pour la tranmission dudit signal de sortie à ladite soupape de commande du flux gazeux (20) ce par quoi cette dernière est ajustée en réponse à ladite variable commandée, modulant ainsi le flux de gaz de fluidisation dans ledit échangeur de chaleur (3) et modulant simultanément le coefficient de transfert thermique entre la surface extérieure des tubes dudit échangeur de chaleur (3) et ledit lit fluidisé de catalyseur à phase dense; et en ce que (e) l'on connecte les conduits d'amenée et de sortie (9, 9') auxdits tubes dudit échangeur de chaleur (3), de façon à ce qu'un fluide de refroidissement puisse passer à travers lesdits tubes.

12. L'appareil de la revendication 11, caractérisé en ce que la portion inférieure du corps dudit échangeur de chaleur (3) est fermée, permettant ainsi la circulation de toutes les particules de catalyseur refroidies de retour dans la chambre de collection des particules chaudes.

13. L'appareil de la revendication 11, caractérisé en ce qu'une sortie pour les particules (5) est située dans la portion inférieure du corps dudit échangeur de chaleur (3), permettant ainsi l'extraction d'au moins une portion des particules de catalyseur refroidies de la portion inférieure du corps dudit échangeur de chaleur.

14. L'appareil de la revendication 13, caractérisé en ce qu'un conduit des particules refroidies (5) connecte ladite sortie pour les particules dudit échangeur de chaleur (3) avec la région de disposition des particules de catalyseur refroidies, dans laquelle une soupape de commande des particules de catalyseur (45) est située dans ledit conduit des particules de catalyseur refroidies (5) et dans laquelle on prévoit des moyens (21, 22, 23) pour la transmission dudit signal de sortie à partir desdits moyens de commande (22) à ladite soupape de commande des particules de catalyseur (45), modulant ainsi simultanément le flux de gaz de fluidisation dans ledit échangeur de chaleur (3) et le flux de particules refroidies à partir dudit échangeur de chaleur (3) et permettant la commande de la quantité de chaleur extraite des particules.

*Fig. I*

Fig. 2

Fig. 3